Europäisches Patentamt

European Patent Office

Office européen des brevets

(19)

(11) Publication number: **0 026 498**
**B1**

(12) **EUROPEAN PATENT SPECIFICATION**

(45) Date of publication of patent specification: **28.12.83**

(51) Int. Cl.³: **B 29 H   17/32**

(21) Application number: **80106142.5**

(22) Date of filing: **09.10.80**

(54) Improvements to the apparatuses for applying elastomeric fillers to tire bead cores.

(30) Priority: **09.10.79 IT 2632979**

(43) Date of publication of application:
**08.04.81 Bulletin 81/14**

(45) Publication of the grant of the patent:
**28.12.83 Bulletin 83/52**

(84) Designated Contracting States:
**DE FR GB NL**

(56) References cited:
**DE - A - 2 360 748**
**DE - A - 2 803 460**
**DE - A - 2 854 063**
**DE - B - 2 458 599**
**FR - A - 2 118 765**
**FR - A - 2 207 021**
**US - A - 4 061 525**

(73) Proprietor: **SOCIETA PNEUMATICI PIRELLI S.p.A.**
**Piazzale Cadorna, 5**
**I-20123 Milan (IT)**

(72) Inventor: **Tarantola, Luciano**
**Via Isimbardi, 41**
**Milano (IT)**
Inventor: **Migliarini, Cesare**
**Viale Fulvio Testi, 90**
**Milano (IT)**

(74) Representative: **Gernhardt, Claus, Dipl.-Ing. et al,**
**Dr. Elisabeth Jung Dr. Jürgen Schirdewahn Dipl.-**
**Ing. Claus Gernhardt Patentanwälte**
**Clemensstrasse 30**
**D-8000 München 40 (DE)**

Courier Press, Leamington Spa, England.

Improvements to the apparatuses for applying elastomeric fillers to tire bead cores

The present invention refers to improvements of apparatuses for applying elastomeric fillers to tire bead cores and more particularly it refers to automatically and continuously operating apparatuses in which the outer surface of a bead core rotating around its own axis is covered with a filler which is part of a continuous strip of unvulcanized material cut little by little in a plurality of segments.

Generally these apparatuses comprise at least a drum able to constitute the seat for encasing a bead core, a disc with an axis of rotation parallel to the axis of the drum for dragging into rotation the drum and for applying the filler to the bead core, and means for butt splicing the facing ends of the filler applied to the bead core. (DE—A—2854063).

The known apparatuses comprise mostly in a very narrow space all the various parts necessary for forming the filler/bead core assembly with the drawback of making difficult the arrangement of accessory devices and still more the loading and the discharging of the product.

A further drawback found in several apparatuses derives from the fact that the loading and discharging operations are still made by hand with consequence greater limitations on the productivity of the apparatuses in question.

In some cases, for example when the apparatuses comprise a drum provided with two separable flanges for discharging the product by dropping it in consequence of its own weight in a plane underlying the drum, there is the possibility that deformations occur at the lip of the filler, which sometimes are unacceptable and which often require manual operations for reestablishing the correct orientation of the filler so as to facilitate the collecting of the various filler/bead core assemblies in regular and aligned order, the one after the other.

Also there are further drawbacks depending on the shape taken by the filler applied to the periphery of the bead core, a shape which is curved in one sense or in the other with respect to the midline of the assembly the orientation of which is orthogonal to the axis of the bead core, so that the discharging of the various assemblies is obstructed by the possibility of mechanical interferences between the filler and eventual guiding surfaces very near to one another between which the filler is passed or between the fillers and their collecting seats comprising successive walls at short distances the one from the other to permit the alignment and the subsequent simultaneous transport of the various assemblies from the apparatus to the machines for the final assembling on the tire carcass.

The causes originating curved profiles or shapes in the filler are substantially two.

A first cause for which the filler bends depends on the fact that the continuous strip having triangular transversal section from which the various segments or fillers are obtained by cuts, is often spirally wound with convolutions overlapped around a horizontal mandrel in such a manner that there is a tendency to move or better to bend the thinner part of the strip from the median plane of the relative triangular section. Consequently bending of the filler occur, said bending being present during and after the application of the filler to the bead core.

A second cause for which the filler bends depends on the same process of applying the filler around the bead core in rotation around its axis. This cause is therefore not dependent on the storing system of the elastomeric strip upstream of the applicator and also on the shape of the cross section of the strip itself. During this application phase in fact the outermost part or edge of the filler is subjected to traction forces because said outermost part or edge must be placed on a circumference the diameter of which is greater with respect to the diameter of the inner part or edge in contact with the bead core.

In consequence of the existence of said traction forces arise compression forces having components directed from the outermost edge towards the innermost one of the filler since the elastomeric material of the filler tends to react for its elastic memory to the expansion effect to which its outer part is subjected.

In the cases in which the resultant of said compression components in the relative cross section of the filler is directed outside the base of the section itself, a bending of the upper part and consequently the cited bending of the filler with the above mentioned drawbacks arises.

Therefore, the present invention aims to improve the productivity of the apparatuses in question and to permit an automatic discharging of the final product without any one of the cited drawbacks.

A feature of the present invention is an apparatus for automatically applying elastomeric fillers to tire bead cores comprising a frame with which is associated at least one drum rotating around its own axis adapted to constitute the seat of a bead core, a disc with an axis of rotation parallel to the axis of the drum for dragging into rotation the drum and for applying the filler to the bead core, means for butt splicing the ends of the filler, and means for loading the bead core. Said apparatus is characterized by the fact of comprising first means for orienting and maintaining the filler on the bead core, before the discharging step, substantially in the plane of the drum midline, second means for discharging the bead core with the filler maintaining unchanged the orientation determined by the first means, said first means comprising a plurality of bodies having contours or outer surfaces of metallic material or of like material to provide good sliding characteristics in the contact with the elastomeric material of the filler, said bodies being mounted idle to rotate around respective shafts of rotation associated with a support of the frame with an arrangement forming an undulate path through which passes the filler associated with the drum in rotation arounds its own axis so as to stretch the filler and to oppose the elastic return of the filler, said second means comprising a discharging device for localized action on the opposite sides of the filler said discharging device comprising an advancing mechanism operating in the plane of the drum midline.

Consequently a first essential characteristic of the invention comprises the cited plurality of bodies arranged in such a way as to intersect the path of movement of the filler supplied to the rotating drum with the consequence of deforming the sides of the filler according to a plurality of waves alternatively concave and convex with respect to the midline of the drum orthogonal to its own axis of rotation.

Therefore an effect of stiffening of the elastomeric material is obtained in practice by the presence of said waves or undulations in the filler and definitely a tendency to oppose the bending of the filler with respect to the midline of the drum.

Also, a second essential characteristic of the invention is the presence of a discharging device for localized action on both sides of the filler so that it is possible in combination with a suitable advancing mechanism to shift the filler/bead core assembly according to a predetermined plane without changing the orientation with respect to the midline of the drum so as to favour the collection of the various assemblies, for example in seats placed side-by-side and in a unidirectional movement.

It is evident that and how this second characteristic permits to overcome advantageously the drawbacks of the known apparatuses in which the discharging operation is performed by manual systems not very productive or by a drum which in the discharging phase produces free falling under gravity of the filler with the bead core with the risk of interferences of the curved profile or shape of the filler by guiding walls or other parts of the frame.

It is also understandable how the invention is not limited to apparatuses comprising only one drum but can be applied to those provided with a plurality of drums. Moreover the invention is applicable to filler strips applied to the bead core by butt splicing the facing ends and to drums of different formation, for example with collapsible or expandable parts for the loading and the discharging operations or also to drums comprising two flanges separable from each other.

In fact the two cited essential characteristics can be similarly applied in all the indicated cases.

Preferably, the apparatus is adapted for the application of a filler of a length equal to the outer development of the bead core and comprises a disc for applying the filler to the bead core as long as the two facing ends are open in the form of "V" and means for orienting the "V" of the filler with respect to the butt splicing means, said apparatus being moreover characterized by the fact of comprising three drums, a three arm system supported by a rotating shaft associated with the frame with drums assembled at the end of the arms in order to freely rotate around their own axes arranged parallel to the central shaft, said arms being oriented to one another at 120° and being situated in correspondence of three positions on the frame representing three stations taken up subsequently by each drum when the central shaft rotates, the first station comprising the disc for applying the filler with its ends open in the form of a "V" to the bead core, the first means for determining an undulate path through which the filler passes when the disc drags the drum into rotation, means for orienting the "V" of the filler with regard to said butt splicing means arranged in a further station, the second station comprising said means for butt splicing the ends in the form of a "V" of the filler, and the third station comprising means for loading the bead cores and second means for maintaining during the discharging operation the filler with an orientation determined by the first means in the first station.

Furthermore the preferred embodiment of the apparatus is characterized by the fact that said plurality of bodies is constituted by small rollers forming a plurality of pairs arranged consecutively, the small rollers of each pair having an axis inclined symmetrically with respect to the plane of the midline of the drum and the contour or outer surface of each small roller extending at least partially over or beyond the midline of the drum so as to form on the filler passing through the pairs, when the drum rotates around its own axis, a plurality of undulations alternatively of opposite sense and of equal amplitude with respect to said midline.

In particular the apparatus is characterized by the fact that said device for discharging the bead core with filler associated with the advancing mechanism comprises two jaws symmetrical with respect to the plane of the drum midline and means for driving said jaws during opening and closing operations with respect to said midline.

According to a particular advantageous aspect with regard to a quick discharging of the bead core/filler assembly, each drum is constituted by two flanges reciprocally movable along the axis of rotation of the drum. In this case the apparatus is characterized by the fact of comprising together with the discharging device for localized action on the facing sides of the filler and together with said mechanism for the advancing of the discharging device, a system of forces directed parallel to the axis of the drum from the frame towards a side of the filler, said system of forces, when the two flanges of the drum are separated from each other, working in combination with the discharging device already acting on the filler to oppose axial movements of the filler with respect to the drum midline.

The present invention will be better understood by the following detailed description made by way of example with reference to the figures of the enclosed sheets of drawing in which:

Fig. 1 shows in a front view an apparatus according to the invention provided with three drums;

Fig. 2 shows a drum of the apparatus in Fig. 1 in the first station during the application of the filler to the bead core;

Fig. 3 shows the drum of Fig. 2 in a subsequent phase;

Fig. 4 shows the means for butt splicing the ends of the filler in a station offset to 120° with respect to the stations shown in Fig. 2 and 3;

Fig. 5 shows the butt splicing means of Fig. 4 after the butt splicing operation of the filler ends;

Fig. 6 shows one of the drums in a transversal section;

Figs. 7 and 8 show the discharging of the filler associated with the bead core in two subsequent phases;

Fig. 9 shows the discharging device and the system for collecting a plurality of filler/bead core assemblies.

An apparatus according to the invention is now described; said apparatus apt for producing various filler/bead core assemblies by continuous and automatic operations, mainly feeding bead cores, associating the filler with a bead core and in particular discharging and collecting a high number of assemblies the one after the other for storing purposes or for transporting them to a suitable department for particular treatments, or for their immediate use in proximity of further machines in continuous processes for the manufacture of tire.

The apparatus as will be now explained possesses such characteristics as to permit a great productivity and it makes use of specific means apt to take care that the filler both during the application of the bead core and during the discharging operation is always oriented in the drum midline to which it is associated, so that the collecting of the various assemblies the one after the other is very easy.

Herebelow as midline of the drum it is understood the plane that with respect to the bead core encased in the corresponding drum seat, is orthogonal to the axis of the bead core and cuts the bead core and the relative housing base into two equal parts.

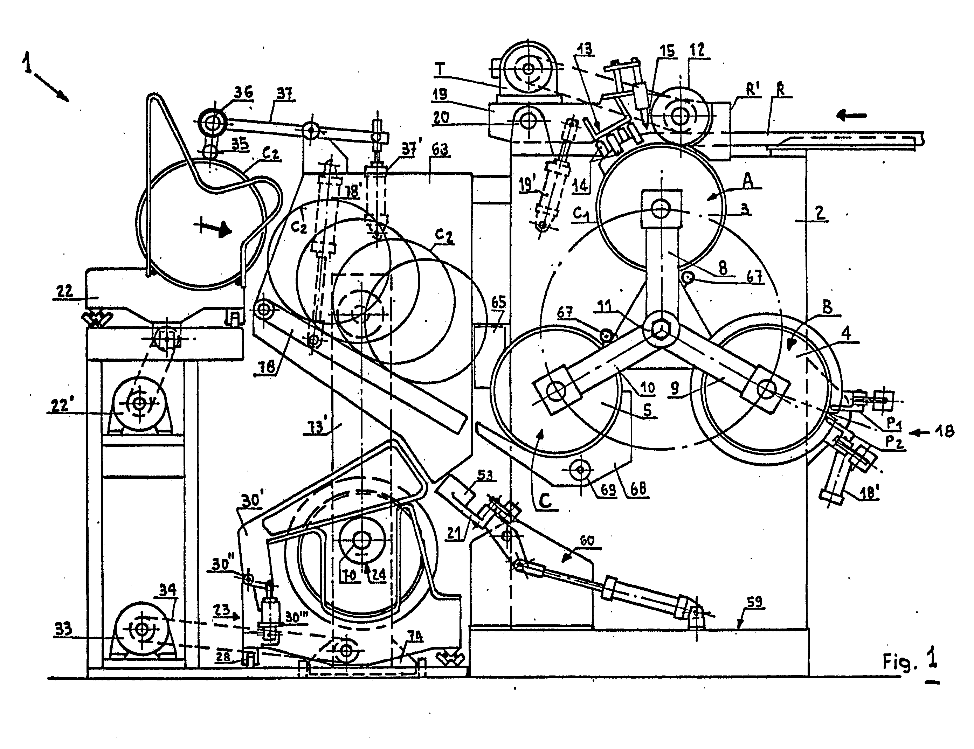

Only by way of example the apparatus 1 (Fig. 1) is now described for the automatic application of fillers with triangular cross-section to bead cores, each filler being obtained by means of a continuous unvulcanized elastomeric strip cut in a plurality of segments with successive cuts in a direction orthogonal to the advancing direction of the strip and with the length of each segment equal to the outer development of the bead core.

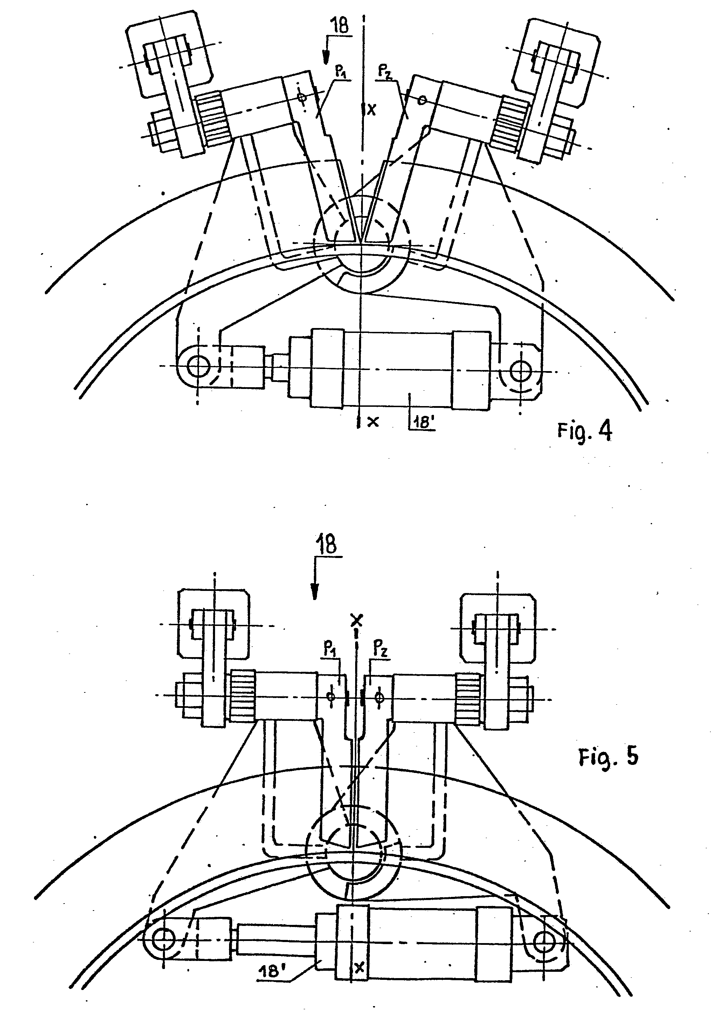

Therefore in this apparatus, after the application to the bead core, the two facing ends of the filler are adjacent at the radially inner edge and are circumferentially spaced at the radially outer edge. Summing up, it will be said herebelow that the facing ends of the filler are open in the form of a "V" (see Fig. 4).

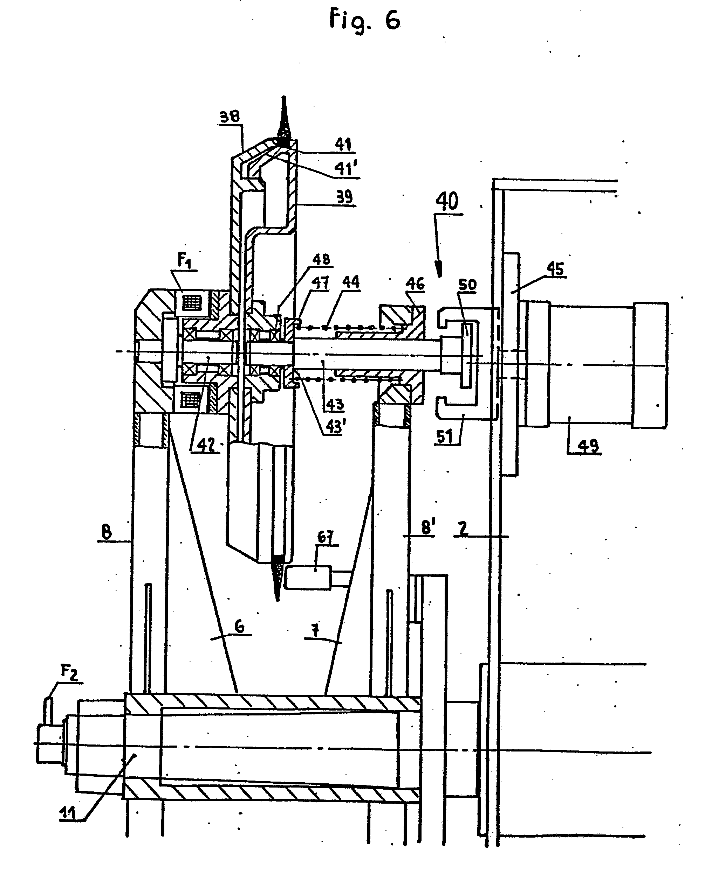

The apparatus 1 comprises a frame 2, three drums 3, 4, 5 for encasing corresponding bead cores, a system for supporting the drums formed by two groups 6, 7 (Fig. 1 and 6) of three arms 8, 9, 10 and 8', 9', 10', respectively, supported by a single central shaft 11 associated to the frame 2 and rotating around its own axis.

Fig. 1 shows and illustrates the arms 8, 9, 10 of the first group 6, whilst for those of the second group with reference numeral 8', 9', 10', Fig. 6 illustrates that they are oriented in the same direction and underly arms 8, 9 and 10, respectively.

The arms of each group are oriented to each other at 120° and as indicated in Fig. 1, when the central shaft 11 does not rotate, said arms are arranged in correspondence of three positions on the frame 11 representing three stations A, B, C taken up subsequently by each drum 3, 4, 5 when the central shaft 11 rotates, so that the apparatus 1 can perform simultaneously in the three stations A, B, C, as explained later on, different operations of associating fillers to bead cores.

In the first station A the apparatus 1 comprises a disc 12 with axis of rotation thereof parallel to the axis of the drum apt to apply the filler to the bead core, a plurality 13 of small rollers 14 to orient and to maintain the filler on the bead core substantially in the midline of the drum still before this latter reaches the discharging station, a body 15 in the form of a "V" actuated by a stem 16 of a suitable cylinder 17 (see Fig. 1, 2, 3) to orient the facing ends of the filler with respect to butt splicing means 18 placed in the second station B. The body 15 and the butt splicing means 18 in one of the possible embodiments are as described in the Italian application No. 30 719 A/77 (& DE—A—2 854 063) of the same Applicant.

In particular the butt splicing means 18 comprises two couples of pliers $P_1$, $P_2$ suitable for clamping opposite sides of the filler in proximity of the facing ends forming a "V" and a mechanism 18' for approaching the two couples of pliers $P_1$, $P_2$ (see Fig. 4, 5).

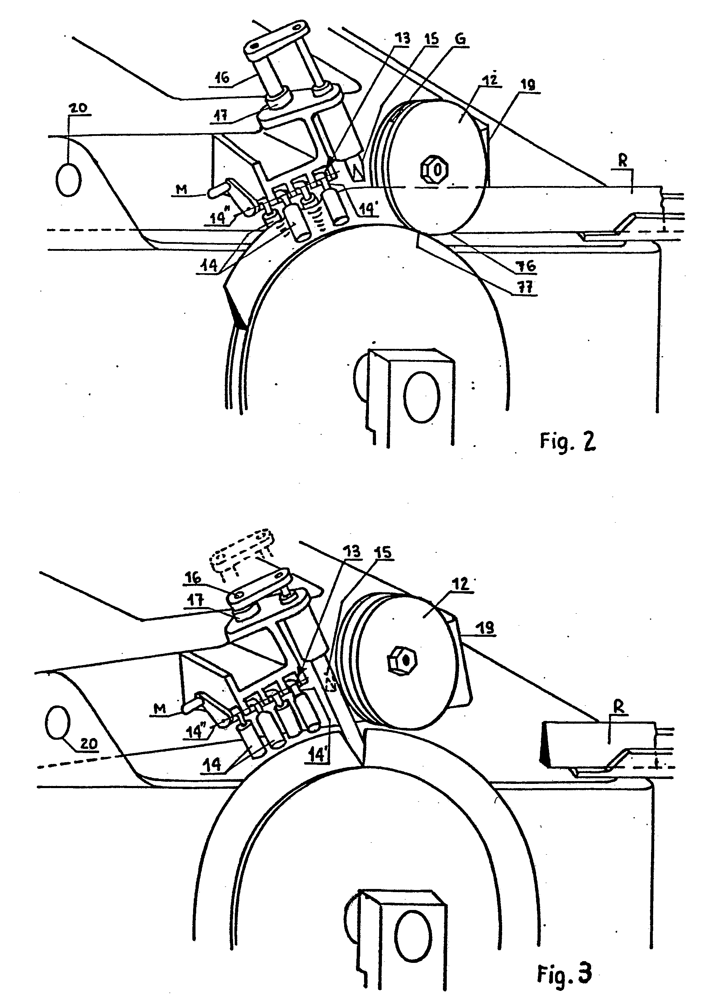

The disc 12, the plurality 13 of small rollers 14 and the cylinder 17 are associated to a single support 19 oscillating around a rotating pin 20 on the frame 2 and having its axis arranged parallel to that of the drum. The oscillation of the support 19 is performed through a fluid-dynamic cylinder 19' whose actuation permits movement of the support 19 from the position of Fig. 2 to that of Fig. 3 and vice versa.

The third station C comprises a discharging device 21 (Fig. 1) for localized action on facing parts of the filler with a relative advancing mechanism of the device itself being always in the midline of the drum which reaches the third station in consequence of the rotation of the central shaft 11.

The apparatus is further provided with a device 22 comprising a motor 22' for the feeding of the bead cores $C_2$ towards the drums 3, 4, 5 which reach step by step the third station C, and in combination with the discharging device 21 a suitable collecting device 23 for the various bead core/filler assemblies and at last means 24 for contemporaneously storing a plurality of various assemblies retained in the collecting device 23.

The devices 22 and 23 have the function of transporting the various bead cores and the bead core/filler assemblies in a single direction with the axes of the various bead cores aligned according to a direction parallel to the axis of the drums 3, 4, 5.

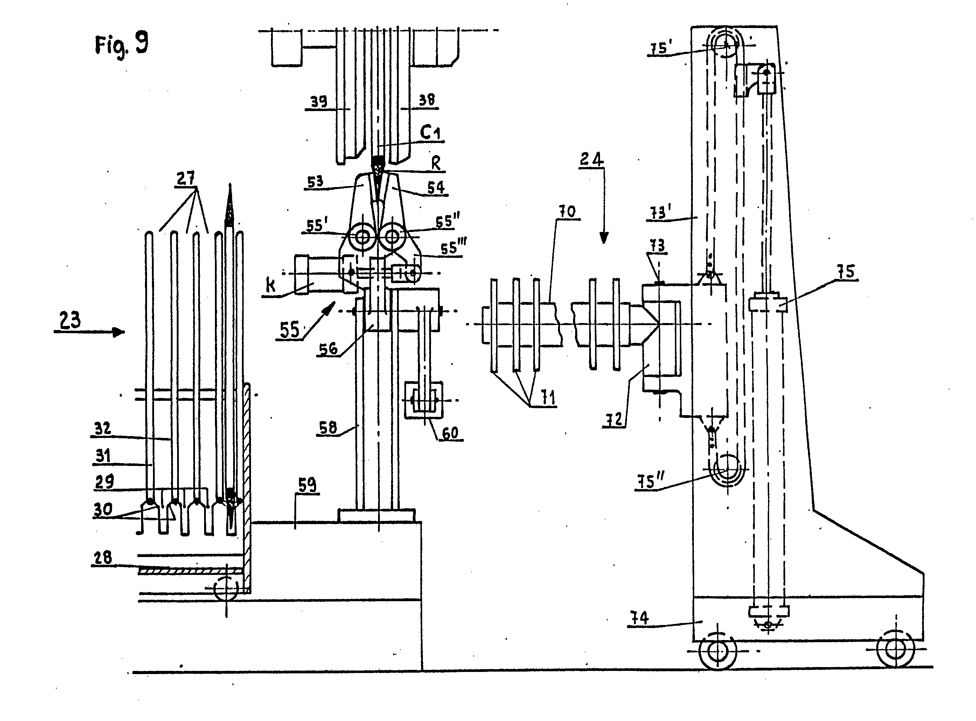

By summing up herebelow, said devices 22, 23 comprise respectively a plurality of housing seats 27 arranged the one after the other (see Fig. 9) for example on a slide 28. Each seat 27 in the device 23 comprises parts 30 opposite from one another at one end portion and at least two walls 31, 32 placed side-by-side.

The distance among the opposite parts 30 is shorter than the maximum width of the fillers so as to support them as clearly shown in Fig. 9.

The slide 28 can be moved by any motor 33 via a drive 34 (Fig. 1) in intermittent movements according to the rest time of the drum in the station C for loading or discharging operations.

The feeding device 22 is provided (Fig. 1) with a particular pulley 35 driven by a motor 36 and supported by a lever 37 hinged at the frame 2 and oscillating under the action of a cylinder-piston-unit 37'. The pulley 35 if placed with its periphery in contact with the development of the bead core $C_2$ produces the transfer of the bead core out of the relative seat 27 towards the station C.

The following description relates to the essential characteristics of the invention, already mentioned and now explained in detail.

In particular, it is stressed that said essential characteristics are those apt to permit a formation of the filler around the bead core with orientation in a single plane corresponding to the midline of the drum, both in the initial phase of the formation of the filler and in the subsequent ones and also in the discharging phase.

The orientation of the filler in the midline of the drum is obtained by a plurality 13 of small rollers 14 (Fig. 2 and 3), having barrel shape, or also conical or also preferably cylindrical shape.

The small rollers 14 comprise metallic contours or outer surfaces and are idle assembled on small shafts 14' the ends of which are connected with screws and nuts in suitable slots of the support 19 or as shown in Fig. 2 around a small shaft 14'' passing through suitable holes of the support 19 and moved or rotated by a lever hand grip M.

On their whole, the small rollers 14 are arranged so as to form a plurality of couples, the one after the other, with the axes of the small rollers 14 of each couple inclined symmetrically with respect to the midline of the drum, crossing one another in correspondence of the connections to the support 19, and with the contour surface of each small roller 14 extending partially over or beyond said midline.

In practice, the distribution of the small rollers 14 gives rise to an undulate path through which the filler passes gradually advanced by a suitable groove G of the disc 12 (Fig. 2, 3) against the bead core to adhere thereon and being dragged by the rotation of the drum around the relative axis with sliding against the contours or outer surfaces of the small rollers 14 which exert on the elastomeric material forces which create a plurality of corrugations or undulations the effect of which is a stiffening of the elastomeric material opposing the deviations of the filler from the midline of the drum.

In the above cited arrangement, the inclination of the small rollers 14 can be varied for example by pivoting in opposite senses to each other the two small rollers 14 of each couple (after having unlocked shaft 14'') and thereafter tightening the new position reached through the rotation of the hand grip M and the fastening of a suitable nut at the end of the small shaft 14'' or in the other cited solution tightening of screws and nuts for each couple of small rollers or moving the screws along the slots for determining the correct position of the various couples of small rollers 14 with respect to the midline of the drum.

Always in the preferred embodiment the apparatus is provided with a particular drum suitable for loading operations of bead cores with the feeding device 22 and in particular for discharging operations of the bead cores with fillers in combination with the discharging device 21.

The characteristic elements of the drum and therefore the discharging device 21 will now be explained for a better understanding of the invention.

Each drum (Fig. 6) comprises two flanges 38, 39, first and second, reciprocally movable along the axis of rotation of the drum, and a driving mechanism 40 for opening the flanges 38, 39, said driving mechanism 40 being one for all the drums and being arranged only in proximity of the station C on the frame 2.

The second flange 39 comprises a cylindrical seat 41 for encasing the bead core and a conical surface 41' for entering into the seat 41 so as to guide and to center the bead core during the loading operation.

The first and the second flange 38, 39 are idle assembled on the respective first and second shaft 42, 43 aligned to each other and supported by two arms 8, 8' both oriented in the same direction in the two groups 6, 7 of arms 8, 9, 10 or 8', 9', 10'.

The driving mechanism 40 comprises means 45 for moving the second shaft 43 with respect to the first one 42 in opposition to a spring 44 provided at each drum.

The spring 44 is arranged around the end part of the second shaft 43 between a bushing 46 fixed to the arm 8' and a suitable envelope cup 47, which is arranged at one side in abutment on a step 43' of the shaft 43 and at the opposite side in abutment on a bearing 48 around which the second flange 39 rotates freely.

The means 45 for moving the second shaft 43 with respect to the first one 42 comprise a fluiddynamic cylinder 49 associated to the frame 2 with its axis parallel to that of the drum in the position corresponding to the station C, an end flange 50 on the second shaft 43 and a hook 51 associated to the stem of the cylinder 49. The hook 51 is placed outside of the path of movement of the end of the second shaft 43 when it moves from one station to the subsequent one dragged by the rotation of the three arm system 8, 9, 10 around the shaft 11.

In the conditions shown in Fig. 6 the second 39 and the first 38 flange are closed in consequence of the action exerted by the spring 44 and of the fact that the flange 50 and the hook 51 do not interfere.

The opening of the flanges 38, 39 depends on the actuation of cylinder 49 and on the consequent interference between hook 51 and flange 50.

As it can be understood, the apparatus 1 could be provided with drums having a shape different from the preferred one now described, or also being of the type having separable parts different from the two flanges, for example a bell and a flange, or also having expandable and collapsible sectors or anyhow in general having means as desired to determine a housing seat for a bead core.

Obviously, for any type of drums it is possible to provide devices acting localized on opposite sides of the filler, i.e. devices with at least two pressure elements acting with opposite thrusts on the sides of the filler, suitable anyhow to block and to maintain the filler in space also when the bead core with the filler is no longer supported by the drum, both for the collapsing of the sectors in a sector drum and for the detachment of the two parts of the drum in the axial direction.

Still in the preferred embodiment relating to the drum provided with two flanges 38, 39, the more suitable discharging device 21 comprises two jaws 53, 54 symmetrical with respect to the midline of the drum arranged at station C (Fig. 9) and means 55 for opening and closing the jaws 53, 54. with respect to said midline. Said means 55 can be different and in particular be based on the same connections and gearing used also for the butt splicing means in the second station B, i.e. pliers $P_1$ and $P_2$ (see Fig. 4, 5).

In particular said means 55 comprise two gears 55' and 55" meshing together at the end of the jaws 53, 54 and a lever 55''' associated at one end to one of the gears 55', 55" and at the opposite end to the stem of a cylinder K.

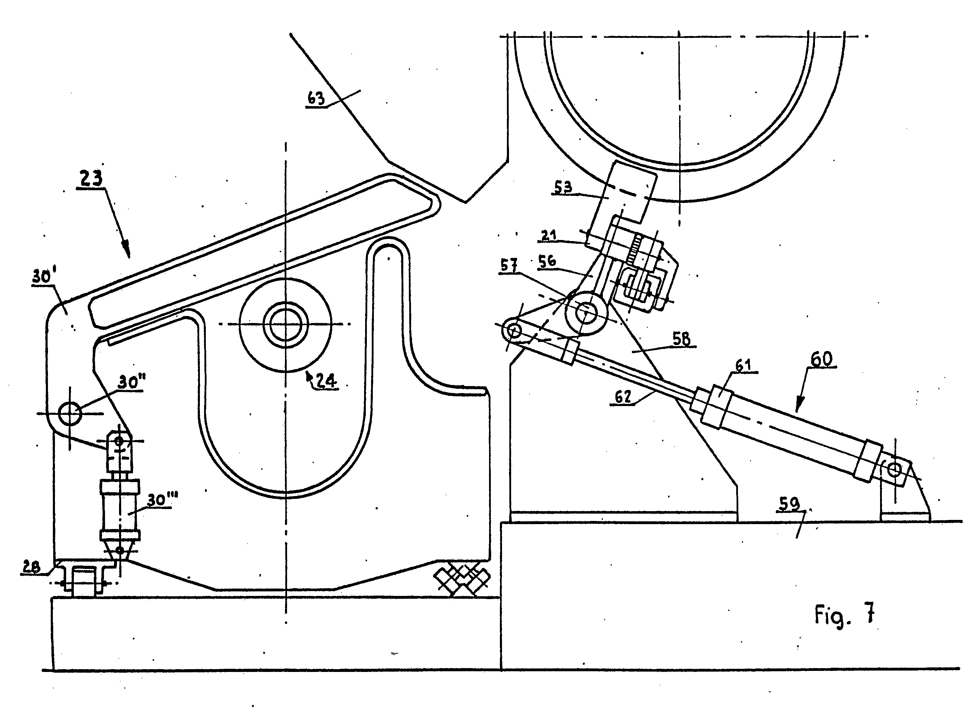

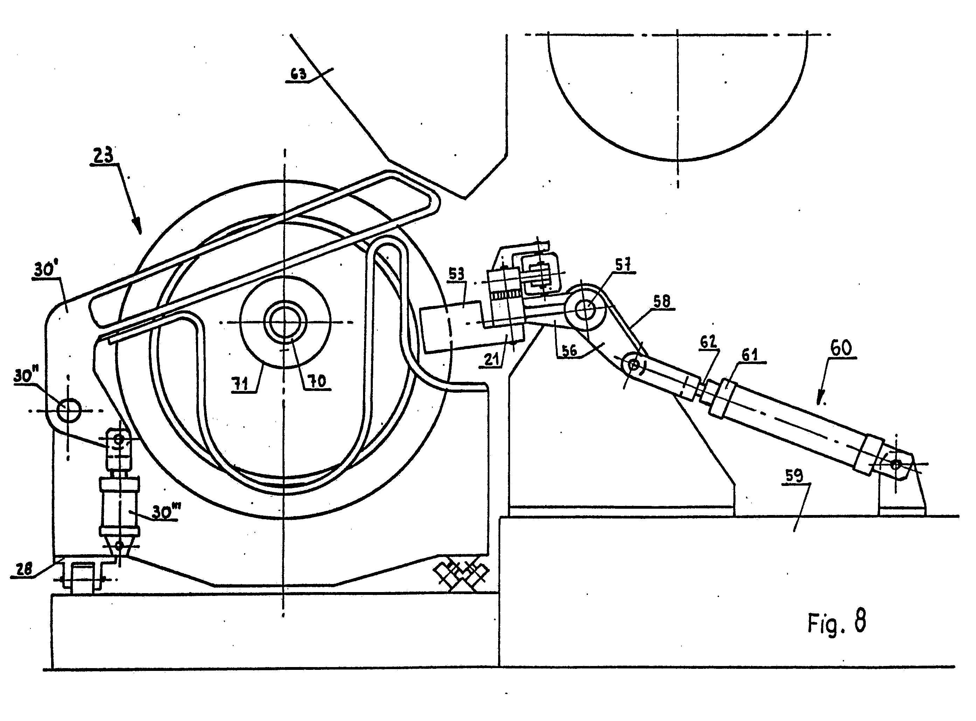

The jaws 53, 54 and the means 55 are then bound to a single supporting structure 56 connected by means of a hinge 57 to a vertical plate 58 (Fig. 7, 8) secured to a horizontal basement 59 of the frame 2.

The hinge 57 has its axis of rotation parallel to that of the drum in station C and the rest position of the jaws 53, 54 is maintained or is changed by the action of a driving mechanism 60 comprising a fluiddynamic system with a cylinder 61 and a stem 62 acting on the supporting structure 56 for moving in the midline of the drum the filler from the center between the flanges 38, 39 toward a housing seat of the collecting device 23.

Preferably there is provided a device for guiding the filler formed by two parallel plates 63, 64 (Fig. 1, 7, 8) secured to parts of the frame 2 between drum and housing seat of the collecting device 23 always arranged in correspondence of the midline of the drum.

The invention foresees moreover in connection with the drum constituted by two flanges 38, 39 the use of further means apt to maintain the filler in the midline of the drum also when the two flanges 38, 39 separate from each other.

Therefore the apparatus 1 comprises in combination with the two jaws 53, 54 already acting on the filler in its lower part, a system of forces directed parallel to the axis of the drum, said forces being apt to oppose axial movements of the filler in the remaining part of its peripheral development not blocked by the jaws 53, 54.

In the preferred embodiment said system of forces comprises at least two abutting surfaces, the first 65 being integral (see Fig. 1) with the frame 2 in station C, the second being always on the same side with respect to the midline of the drum and constituted by a pin 67 carried by the second group 7 of arms 8', 9', 10' for each drum (see Fig. 1 and 6).

As already said, in the station C where the discharging operation occurs, it is also foreseen the loading of the bead cores coming from the feeding device 22, during which loading a bead core $C_2$ is directed at first towards the already cited guiding plates 63, 64 described as guiding elements used during the discharging operation, and at last (see Fig. 1) towards a suitable cradle 68, the periphery of which being apt to receive and to encase a bead core by the use of suitable magnetic means.

Said cradle 68 is placed outside the drum and in proximity of the lower portion thereof, and is movable axially to the drum by means of a suitable fluiddynamic drive the stem 69 of which is connected to the cradle center. In this way the cradle 68 can be held between the two flanges 38, 39 of the drum in correspondence of the midline thereof corresponding to the loading position, or drawn away when the drum dragged by the arms 8 to 10 is in rotation around the central shaft 11.

The description of the apparatus is completed making reference to further means 24 for retaining contemporaneously a plurality of filler/bead core assemblies already inserted in the seats of the collecting device 23.

Said retaining means 24 comprise a mandrel 70 (see Fig. 9), a plurality of discs 71 placed side-by-side and coaxially secured to the mandrel 70, a vertical column 72 rotating around its own axis 73 and apt to maintain the mandrel 70 in a horizontal position, means for moving the mandrel 70 in a direction parallel to the axis of the drum towards the inside of the filler/bead core assemblies retained in the seats 27 of the collecting device 23, means for vertically moving the mandrel 70 from a lower horizontal position to an upper horizontal position so as to lift and to support the various assemblies between the discs 71.

It is understandable that the means for moving the mandrel 70 horizontally and vertically can be any one, for example it can be supposed that the column 72 is mounted on the structure 73' of a suitable trolley 74 movable by hand or by a motor. The column 72 is then sliding in a longitudinal groove (not shown) of the structure 73' if it is subjected to the action of a chain moved by a cylinder 75, said chain passing around pulleys 75'—75" fixed to the end of the structure 73'.

The operation of the apparatus is now described starting from station A where a drum 3 with the relative bead core C1 (Fig. 1, 2) is already present.

During this step an elastomeric filler R already cut to a length corresponding to the peripheral development of the bead core C1 is passed at first through a suitable slot R', then through the groove G (Fig. 2) of the disc 12 dragged into rotation by its own motor T so as to adhere to the bead core $C_1$, which on its turn is in rotation with the drum 3 through the contact between the periphery 76, 77 of the disc and of the drum respectively.

Always in consequence of the rotation of the drum, the filler R is obliged to remain in tight contact between the plurality 13 of the small rollers 14 following an undulate path determined by the fact that the contours or outer surfaces of the small rollers 14 go or extend at least for a certain portion of their development over the midline of the drum.

Therefore in this step, as visible in Fig. 2, the filler R is deformed by the small rollers 14 of each couple with undulations of opposite sense with respect to the midline of the drum.

In practice it can be said that the upper portion of the filler R being in contact with the small rollers 14, arranged as indicated, develops according to a path longer than that could be obtained in the absence of the small rollers 14, so that said portion is subjected to an elongation the effect of which acts opposite to the elastic memory of the elastomeric material tending to react with compression components from the outermost edge toward the innermost edge of the filler R itself with the consequence of possible bendings in one sense or in the other with respect to the midline.

Consequently, the stretching action of the small rollers 14 on the filler R, favouring the orientation in the midline of the drum and avoiding the cited bendings, constitutes a great advantage for the subsequent discharging operation of the whole assembly according to the midline itself.

Of course, the couples of small rollers 14 can be of a number different from that represented in Fig. 2 and their interference with respect to the midline of the drum can be easily varied, rotating opportunely the hand grip M.

At the end of the stretching step, it is provided the centering of the facing ends of the filler forming between them a "V" with respect to the butt splicing means 18 arranged in the second station B. Said operation takes place (Fig. 2, 3) by setting in action the cylinder 17 so that the stem 16 leads the body 15 in the form of "V" to the inside of the "V" of the filler R determining in this way a predetermined angular relation between the ends of the filler R and the plane of symmetry X X (Fig. 4, 5) between the two couples of pliers $P_1$, $P_2$ of the means 18 in the station B.

The correct position of the filler R with respect to said means 18 when the body 15 is retracted upwards is then maintained by the actuation of a suitable electromagnetic brake F1 (Fig. 6) of known type inside the drum and supplied with energy by wires F2 through a not shown slip ring. The effect of the brake F1 is that rotations of the drum with respect to its own axis are avoided, and therefore any loss of orientation of the "V" of the filler R during the moving from station A to B is prevented.

At last it is provided the subsequent operation for drawing the small rollers 14 away from disc 12, and then the fluiddynamic control of the body 15, acting on cylinder 19' produces pivoting of the support 19 around the hinge 20 from the position of the Fig. 2 to that of Fig. 3.

Under these conditions the drum by a rotation of 120° of shaft 11, passes from station A to station B with the midline of the "V" of the filler R exactly coinciding with that of the plane of symmetry XX between the pliers $P_1$ and $P_2$ (see Fig. 4).

In the subsequent step the pliers $P_1$ and $P_2$ and therefore the mechanism 18 originate the butt splicing of the two facing ends of the filler R, as stressed during the passage from the position of Fig. 4 to the position of Fig. 5, and as already explained in the cited Italian patent application No. 30 719 A/77 (& DE—A—2854063).

At the end of the cited step the shaft 11 still rotate over 120° as long as the drum with the filler R passes from station B between the jaws 53, 54 of station C (see Fig. 9) where the discharging steps of the filler R/bead core C1 assembly take place as follows:

— at first the cylinder K is actuated so that the relative stem originates through the lever 55''' the rotation of the two gears 55' and 55" associated to the jaws 53, 54 and these latter consequently approach reciprocally with respect to the midline of the drum up to exert localized pressure equal and opposite on the lower portion of the filler R.

At this point the filler R is blocked in space with respect to the frame 2 in the midline of the drum corresponding to the position of the opposed and closed flanges 38, 39.

Consequently it is determined in space an alignment between the filler/bead core assembly held between the jaws 53, 54 and the median plane of a housing seat (see Fig. 7) of the collecting device 23 of the various filler/bead core assemblies.

Subsequently the driving mechanism 40 (Fig. 6) is activated for having the two flanges 38 and 39 of the drum opened, i.e. fluid is admitted to the inside of cylinder 49 so that the relative stem moves according to Fig. 6 from the left toward the right, making the hook 51 interfere with the flange 50 of the second shaft 43 exerting such a force as to overcome the force of spring 44 and consequently causing the detachment of the flange 39 from the flange 38 and the opening of the drum.

The invention also in this step provides very favourably a system of forces apt to prevent the filler R blocked only in the lower part by the jaws 53, 54 from moving laterally following the application of the bead core with force during the loading to the cylindrical seat 41 of the second flange 39 now in the phase of lateral movement toward the frame 2.

In fact, always in the cited detaching step of the flange 39 and of the flange 38, the upper portion of the filler R meets immediately a force opposing any lateral movement by the presence of the abutting surface 65 integral with the frame 2 and by the pin 67 associated to the second group 7 of arms 8' to 10' (see Fig. 1, 6).

Therefore it can be affirmed that the discharging device 21 having localized action, and the abutting surfaces 65, 67 placed on the same part with respect to the midline of the drum constitute a system of forces apt to maintain the filler R in an unchanged plane with respect to that of the other stations even if the drum is in the opening phase and at any value of force which is necessary at the beginning to insert and to center the bead core in the seat of the second flange 39.

In a further step the cylinder 61 of the advancing mechanism 60 is set in action causing through the stem 62 the rotation of the supporting structure 56 and therefore of the jaws 53, 54 with the filler/bead core assembly. During this movement the bead core $C_1$ with the filler R passes from the position between flanges 38 and 39 of the drum (Fig. 9) through the guiding plates 63, 64 (Fig. 1, 8) to a position in which it is exactly in the housing seat 27 of the collecting device 23 for the various assemblies. Said device 23 on its turn immediately after the loading of the assembly is set in motion in a direction parallel to the axis of the drum to provide a new empty housing seat 27 in correspondence of the midline of the drum 4 which in this step is still in station B for butt splicing the ends of a further filler applied to a further bead core.

At last it is provided the loading of a bead core $C_2$ on the drum which is in the open position in station C, and precisely:

— at first the cradle 68 is moved from the inactive position in proximity of the frame 2 to the active position in correspondence of the midline of the drum located and defined by the flanges 38, 39 when they are closed;

— then, the pulley 35 (Fig. 1) is set in action by making it rotate around its axis through the motor 36, and by inclining opportunely the lever 37 with the relative aid of the cylinder stem unit 37', and with a tangential force exerted by the pulley 35 there is originated movement of the bead core C2 out of the housing seat of the feeding device 22.

In this way the bead core C2, guided between the containment plates 63, 64, rolls along the track 78 already provided with the drive 78' and reaches the periphery of the cradle 68 where it is held in fixed position by the magnetic means.

Subsequently the drive 78' is actuated so as to lift the track 78 to avoid mechanical interference by a further bead core with the filler in the discharging phase.

At last, the fluiddynamic cylinder 49 is actuated (Fig. 6) to have the action of the spring 44 effective so as to approach the flange 39 towards the flange 38, determinating in this way the centering of the bead core C2 with respect to the conical surface 41' for the entrance of the second flange 39 and then the insertion of the bead core in the annular seat 41.

At the end of this latter step the cradle 68 is brought again in the original position and then it is caused intermittent rotation of shaft 11 in steps of 120°, so as to bring cyclically each of the three drums 3, 4, 5 in the positions corresponding to the three stations A, B, C to repeat the various assembling operations explained before.

It has been described previously the association of the apparatus to the mandrel 70 apt to retain contemporaneously a plurality of filler/bead core assemblies already aligned in the housing seats 27 of the collecting device 23. The mandrel 70 is inserted inside the various assemblies and then lifted with the column 72 so as to retain the said assemblies (see Fig. 9).

Obviously in the case in which the housing seats 27 of the collecting device 23 comprise an upper wall 30' for guiding more completely the filler in the discharging step from station C, said wall 30' is pivotable around a hinge 30" (see Fig. 1) and pivoting using a drive 30''' and a lever is caused to permit lifting of the mandrel 70 and retaining contemporaneously various assemblies.

The apparatus has the advantage of a high productivity since contemporaneously in different stations are made different assembling operations on three different filler/bead core assemblies.

In particular it is evident the advantage of associating the three drum system with systems for transporting bead cores and bead cores with relative fillers comprising the common characteristic of gathering in a narrow space a plurality of said elements or assemblies.

Consequently it is clearly understandable the further advantage of the apparatus in question to be used on automatic lines at high productivity for building tires being able to continuously supply a plurality of building machines with filler/bead core assemblies.

Although some particular advantageous embodiments of the apparatus have been described, it is understood that the invention includes in its scope any other alternative embodiment obvious to a technician of the field, which can be derived from the inventive principles here explained.

For example, the plurality 13 of small rollers 14 could be placed in a station different from that shown in Fig. 2 and 3, or in the station A and also in the station B or alone in a further station or in combination with small rollers in other stations.

The essential condition to be respected whatever the station in which there are the small rollers may be, is that the filler is obliged to pass among them according to an undulate path when the respective drum is rotated by a disc as that of Fig. 2, 3 or by any other motor.

Clearly the arrangement of a plurality of small rollers in a plurality of stations or also a high number of revolutions of the drum to which is associated the filler passing among the small rollers, leads to a stretching effect of the filler and therefore opposes much more the tendency to bend.

It is also evident that the small rollers can be realized with metallic surfaces or surfaces equal to metal to the effect of good sliding characteristics between the surface of the small rollers and the elastomeric material of the filler.

Also by way of example it is cited that the apparatus could have a greater number of drums with respect to that indicated in the example, and loading and discharging positions in different stations or also there may be a distribution of the orienting and butt splicing means in a different way according to other solutions.

**Claims**

1. Apparatus (1) for automatically applying elastomeric fillers (R) to tire bead cores ($C_1$, $C_2$) comprising a frame (2) with which is associated at least one drum (3, 4, 5) rotating around its own axis adapted to constitute the seat for a bead core ($C_1$), a disc (12) with an axis of rotation parallel to the axis of the drum (3) for dragging into rotation the drum (3) and for applying the filler (R) to the bead core ($C_1$), means (18) for butt splicing the ends of the filler (R), and means (22) for loading the bead core ($C_2$), said apparatus being characterized by the fact of comprising first means (13, 14) for orienting and maintaining the filler (R) on the bead core ($C_1$) before the discharging step substantially in the plane of the drum midline, second means (21, 63, 64) for discharging the bead core with the filler maintaining unchanged the orientation determined by the first means, said first means (13, 14) comprising a plurality (13) of bodies (14) having contour surfaces of metallic material or of like material to provide good sliding characteristics in the contact with the elastomeric material of the filler (R), said bodies (14) being mounted idle to rotate around respective shafts (14') of rotation associated with a support (19) of the frame (2) with an arrangement forming an undulate path through which passes the filler (R) associated with the drum (3) in rotation around its own axis so as to stretch the filler (R) and to oppose the elastic return of the filler, said second means (21, 63, 64) comprising a discharging device (21) for localized action on the opposite sides of the filler (R) said discharging device comprising an advancing mechanism (60) operating in the plane of the drum midline.

2. Apparatus as in claim 1 for applying a filler (R) of a length equal to the outer development of the bead core ($C_1$) where the disc (12) applies the filler (R) to the bead core until the two facing ends are open in the form of a "V", comprising means for orienting the "V" of the filler with respect to the butt splicing means (18), said apparatus being characterized by the fact of comprising three drums (3, 4, 5), a three arm (8, 9, 10) system (6, 7) supported by a rotating central shaft (11) associated with the frame (2) with the drums assembled at the ends of the arms to freely rotate around their own axes arranged parallel to the central shaft, said arms being oriented to one another at 120° and being situated in correspondence of three positions on the frame representing three stations (A, B, C) taken up successively by each drum when the central shaft rotates, the first station (A) comprising the disc (12) for applying the filler (R) to the bead core $(C_1)$ with the ends thereof open in the form of a "V", the first means (13, 14) for determining an undulate path through which the filler passes when the disc drags into rotation the drum, and the means for orienting the "V" of the filler with regard to said butt splicing means (18), the latter being arranged in a further station, the second station (B) comprising said means (18) for butt splicing the ends in the form of a "V" of the filler, the third station (C) comprising the means (68) for loading the bead core $(C_2)$ and the second means (21, 63, 64) for maintaining during the discharging step the filler with orientation determined by the first means (13, 14) in the first station (A).

3. Apparatus as in claim 2, characterized by the fact that the disc (12) and the first means (13, 14) comprising the plurality of bodies (14) for orienting and maintaining the filler (R) in the drum midline and the means (15, 16) for orienting the "V" of the filler, are associated with a single support (19) pivotable around a rotating pin (20) on the frame (2) with the axis thereof arranged parallel to the drum axis.

4. Apparatus as in any one of the preceding claims, characterized by the fact that said plurality (13) of bodies (14) is constituted by small rollers (14) forming a plurality of pairs arranged the one after the other, the small roller, of each pair having an axis inclined symmetrically with respect to the plane of the midline of the drum (3) and the contour or outer surface of each small roller extending at least partially over or beyond the drum midline so as to form on the filler (R) passing through the pairs and when the drum (3) rotates around its own axis, a plurality of undulations alternatively of opposite sense and of equal amplitude with respect to said midline (Fig. 2).

5. Apparatus as in claim 4, characterized by the fact that said small rollers (14) of each couple comprise means (M) for varying the inclination with respect to the plane of the drum midline.

6. Apparatus as in claims 1 or 2, characterized by the fact that said device (21) for discharging the bead core with the filler associated with the advancing mechanism (60) comprises two jaws (53, 54) symmetrical with respect to the plane of the drum midline, means (K) for setting in action said jaws for opening and closing operations with respect to said midline (Fig. 9).

7. Apparatus as in claim 6, characterized by the fact that the jaws (53, 54) and the means (K) for setting in action said jaws are connected to a single supporting structure (56) hinged to a plate (58) of the frame (2) with the axis of rotation of the hinge (57) parallel to the axis of the drum (5), and said advancing mechanism (60) of the device (21) comprises a fluiddynamic system comprising a cylinder (61) and a stem (62) suitable for the rotation of said supporting structure around the hinge (57) applied to said plate (58) of the frame (2).

8. Apparatus as in claim 7, characterized by the fact of comprising in combination with the discharging device (21) applied to said supporting structure (56) a device (23) for collecting the bead core/filler assemblies adapted to transport the various assemblies with aligned bead core axes and comprising a plurality of housing seats (27) arranged one after the other, means for advancing said plurality of seats in a direction parallel to the drum axis, each seat comprising at least two walls (31, 32) placed side-by-side and a supporting base (30) for the outermost part or edge of the filler (R) (Fig. 9).

9. Apparatus as in claim 8, characterized by the fact of comprising between the drum and the seats (27) for encasing the various assemblies one at a time arranged in correspondence of the drum midline, to guiding plates (63, 64) symmetrically arranged with respect to the drum midline and applied to fixed parts of the apparatus (1), the bead core/filler assembly being transported between said two guiding plates when said supporting structure (56) of the discharging device (21) rotates towards said collecting device (23).

10. Apparatus as in claim 8, characterized by the fact of comprising means (24) for retaining simultaneously a plurality of said assemblies of the collecting device (23).

11. Apparatus as in claim 10, characterized by the fact that said retaining means (24) comprise a mandrel (70), a plurality of discs (71) placed side-by-side and coaxially secured to the mandrel, a vertical column (72) rotating around its own axis (73) to which is connected the mandrel in horizontal position, means for moving the mandrel in a direction parallel to the drum axis towards the inside of the filler/bead core assemblies encased in the seats (27) of the collecting device (23), means for vertically moving the mandrel from a lower horizontal position to an upper horizontal position so as to lift and to support the various assemblies between said discs placed side-by-side.

12. Apparatus as in claim 1 or 2, each drum (3, 4, 5) being constituted by two flanges (38, 39) reciprocally movable along the axis of rotation of the drum to permit the loading of a bead core and the discharging of the bead core with the filler, characterized by the fact of comprising with the discharging device (21) for localized action on the opposite sides of the filler and with said mechanism (60) for the advancing of the discharging device, a system of forces directed parallel to the axis of the drum from the frame (2) towards a side of the filler, said system of forces, when the two flanges (38, 39) of the drum (5) are separated from each other, working in combination with the discharging device (21) already acting on the filler to oppose axial movements of the filler with respect to the drum midline.

13. Apparatus as in claim 12, characterized by the fact that said system of forces for opposing axial movements of the filler when the drum (5) is in the discharging station (C), comprises at least two abutting surfaces (65, 67) in stationary position with respect to the axial movement of the flange of the drum to which said abutting surfaces are laterally opposed.

14. Apparatus as in claim 12, characterized by the fact of comprising a cradle (68) with a periphery suitable to receive and to encase a bead core (C₂) and with its axis parallel to the axis of the drum (5), magnetic means for maintaining the bead core on the periphery of the cradle, a fluiddynamic cylinder secured to the frame (2) with stem (69) associated with the cradle (68) for a movement of the same in a direction parallel to the axis of the drum (5) from a rest position spaced from the drum up to a loading position in which the bead core is encased in the profile of the cradle between the two flanges (38, 39) of the open drum.

15. Apparatus as in claim 14, characterized by the fact of comprising a system for transporting a plurality of bead cores (C₂) with aligned centers comprising a slide with a plurality of housing seats, each seat being constituted by a base for bearing the bead core and by lateral walls for containing the sides of the bead cores, means for driving the slide in direction parallel to the drum axis, means (37) suitable for applying a tangential thrust to the profile of the bead core for a movement from the housing seat to said loading cradle (68).

16. Apparatus as in claims 1 or 2, characterized by the fact of comprising a driving mechanism (40) for opening the drum comprising two flanges (38, 39) capable of being associated with each other for encasing a bead core and capable of being separated for permitting the discharging of the bead core with the filler.

17. Apparatus as in claim 16, characterized by the fact that said driving mechanism (40) acts on said drum constituted by first and second flanges (38, 39), idle assembled on the respective first and second shaft (42, 43) with aligned axes and with said second shaft (43) capable of being moved axially with respect to the first one, said driving mechanism (40) comprising means (49) for moving the second shaft (43) with respect to the first (42) in opposition to a helicoidal spring (44), said helicoidal spring being applied in the position of the second shaft downstream of the respective flange so as to exert a compression action of the second flange with respect to the first one, said means for moving the second shaft with respect to the first one being adapted to apply a force at least equal and opposite to that of the spring for the detachment of the second flange with respect to the first one.

18. Apparatus as in claim 17, characterized by the fact that said means (40) for moving the second shaft (43) with respect to the first one (42) comprise a fluiddynamic cylinder (49) on the frame (2), a flange (50) applied perpendicularly to the free end of the second shaft, and a hook (51) associated to the end of the stem of the fluiddynamic cylinder (49), said hook (51) being placed at a distance from said flange (50) and in abutment on the flange when said stem is set in action so as to interfere and to exert on said flange a force equal and opposite to that of said spring (44).

19. Apparatus as in claim 18, characterized by the fact that in a three drum (3, 4, 5) system said first flanges of the drums (3, 4, 5) (38) are idle assembled on first shafts (42) associated to the end of a first group (6) of three arms (8, 9, 10) inclined to one another at 120°, the second flanges (39) of the drums (3, 4, 5) are idle assembled on second shafts (43) of a second group (7) of three arms (8', 9', 10') inclined to one another at 120°, said two groups being associated with the same central shaft (11) and said fluiddynamic cylinder (49) for opening the flanges being arranged with its stem parallel to the axis of the central shaft in the position reached cyclically by each drum (3, 4, 5) for loading the bead core and for discharging the bead core with filler.

**Revendications**

1. Appareil (1) pour appliquer automatiquement des bourrages en élastomère (R) sur des tringles de talon de pneus (C₁, C₂), comportant un bâti (2) auquel est adjoint au moins un tambour (3, 4, 5), qui tourne autour de son axe, et qui est exécuté de telle sorte qu'il constitue le siège d'une tringle de talon (C₁), un disque (12) ayant un axe de rotation parallèle à l'axe du tambour (3) pour mettre le tambour (3) en rotation, et pour disposer le bourrage (R) sur la tringle de talon (C₁), un dispositif (18) pour épisser bout à bout les extrémités du bourrage (R) et un dispositif (22) pour amener la tringle de talon (C₂), appareil caractérisé par le fait qu'il présente un premier dispositif (13, 14) pour aligner et maintenir le bourrage (R) avec la tringle de talon, pratiquement dans le plan de la ligne médiane du tambour, avant la phase de dégagement, et un deuxième dispositif (21, 63, 64) pour dégager la tringle de talon avec le bourrage, l'alignement déterminé par le premier dispositif étant maintenu inchangé, le premier dispositif (13, 14) présentant de multiples corps (14) qui ont des surfaces de contour en matériau métallique ou en matériau similaire pour conférer de bonnes propriétés de glissement au contact de l'élastomère du bourrage (R), les corps (14) étant disposés de telle sorte qu'ils peuvent tourner librement autour de tiges de rotation correspondantes (14'), qui sont associées à un support (19) du bâti (2) avec une disposition telle qu'il y a formation d'un trajet ondulé que suit le bourrage (R) associé au tambour (3) qui tourne autour de son axe, de telle sorte que le bourrage (R) est tendu et que le retour élastique du bourrage est contrarié, que le deuxième dispositif (21, 63, 64) présente un dispositif de dégagement (21) pour une action localisée sur les côtés opposés du bourrage (R), et que le dispositif de dégagement présente un mécanisme d'avance (60), qui agit dans le plan de la ligne médiane du tambour.

2. Appareil selon la revendication 1, pour l'application d'un bourrage (R) d'une longueur égale à la longueur extérieure de la tringle de talon (C$_1$), le disque (12) appliquant le bourrage (R) sur la tringle de talon jusqu'à ce que les deux extrémités, tournées l'une vers l'autre, soient ouvertes en forme de "V", un dispositif étant prévu pour aligner le "V" du bourrage relativement au dispositif d'épissage bout à bout (18), caractérisé par le fait que l'appareil présente trois tambous (3, 4, 5) qu'un système (6, 7), présentant trois bras (8, 9, 10), est soutenu par un arbre central de rotation (11), qui est associé au bâti, que les tambours sont disposés aux extrémités des bras de telle sorte qu'ils peuvent tourner librement autour de leurs axes, disposés parallèlement à l'arbre central, que les bras sont orientés de façon à faire entre eux des angles de 120°, et sont disposés sur le bâti au niveau de trois positions, qui constituent trois postes (A, B, C), dans lesquels chaque tambour arrive successivement lors de la rotation de l'arbre central, que le premier poste (A) présente le disque (12) pour l'application du bourrage (R) sur la tringle de talon (C$_1$), ses extrémités étant ouvertes en forme de "V", le premier dispositif (13, 14) qui détermine un trajet ondulé, par lequel passe le bourrage quand le disque met le tambour en rotation, ainsi que le dispositif servant à aligner le "V" du bourrage relativement au dispositif d'épissage bout à bout (18), qui est disposé a un autre poste, que le deuxième poste (B) présente le dispositif (18) d'épissage bout à bout des extrémité ouvertes en "V" du bourrage, et que le troisième poste (C) présente le dispositif (68), servant à amener la tringle de talon (C$_2$), ainsi que le deuxième dispositif (21, 63, 64), pour maintenir le bourrage, pendant la phase de dégagement, avec une orientation qui est déterminée par le premier dispositif (13, 14) du premier poste (A).

3. Appareil selon la revendication 2, caractérisé par le fait que le disque (12), le premier dispositif (13, 14), qui présente les multiples corps (14) pour aligner le bourrage (R) suivant l'axe médian du tambour, et le maintenir ainsi, et le dispositif (15, 16), servant à aligner le "V" du bourrage, sont associés à un seul support (19), qui peut pivoter sur le bâti (2) par un tourillon (20) dont l'axe est disposé parallèlement à l'axe du tambour.

4. Appareil selon l'une quelconque des revendications précédentes, caractérisé par le fait que les multiples (13) corps (14) sont constitués par de petits rouleaux, qui forment de multiples paires, disposés l'une derrière l'autre, que le petit rouleau de chaque paire a un axe qui est dirigé obliquement, symétriquement par rapport au plan de la ligne médiane du tambour (3), et que le contour ou la surface extérieure de chaque peitit rouleau s'étend au moins partiellement sur la ligne médiane du tambour ou jusqu'à un point au delà de celle-ci, de telle sorte qu'il y a formation, sur le bourrage (5), qui passe à travers les paires lors de la rotation du tambour (3) autour de son axe, de multiples ondulations, qui ont alternativement des sens opposés, et une amplitude égale par rapport à la ligne médiane mentionnée (figure 2).

5. Appareil selon la revendication 4, caractérisé par le fait que les petits rouleaux (14) de chaque paire présentent un dispositif (M) pour modifier leur obliquité relativement au plan de la ligne médiane du tambour.

6. Appareil selon la revendication 1 ou 2, caractérisé par le fait que le dispositif (21), qui sert à dégager la tringle de talon, munie du bourrage, et qui est muni du mécanisme d'avance (60), présente deux mâchoires (53, 54), qui sont symétriques par rapport au plan de la ligne médiane du tambour, et qu'il est prévu un dispositif (K) pour l'actionnement des mâchoires en vue de leur ouverture et de leur fermeture relativement à la ligne médiane mentionnée (figure 9).

7. Appareil selon la revendication 6, caractérisé par le fait que les mâchoires (53, 54) et le dispositif (K), servant à actionner les mâchoires, sont réunis à une seule structure porteuse (56), qui est articulée sur une plaque (58) du bâti (2), que l'axe de rotation de l'articulation (57) est dirigé parallèlement à l'axe du tambour (5), et que le mécanisme d'avance (60) du dispositif (21) présente un système dynamique à fluide, muni d'un cylindre (61) et d'une tige (62), qui sont adaptés pour faire tourner la structure porteuse autour de l'articulation (57), disposée sur la plaque (58) du bâti (2).

8. Appareil selon la revendication 7, caractérisé par le fait que, en combinaison avec le dispositif de dégagement (21), disposé sur la structure porteuse (56), est prévu un dispositif (23), qui sert à recueillir les ensembles formés par la tringle de talon et le bourrage, et qui est réalisé de telle sorte qu'il transporte les différents ensembles avec les axes des tringles de talon dressées, que le dispositif (23) présente de multiples sièges de réception (27), qui sont disposés l'un derrière l'autre, et un dispositif pour déplacer vers l'avant les multiples sièges dans une direction parallèle à l'axe du tambour, et que chaque siège présente au moins deux parois (31, 32) qui sont disposées côte à côte, et une base de support (30) pour la partie la plus extérieure ou l'arête du bourrage (R) (figure 9).

9. Appareil selon la revendication 8, caractérisé par le fait que, entre le tambour et les sièges (27) destinés à recevoir un par un les différents ensembles qui sont disposés au voisinage de la ligne médiane du tambour, sont prévues deux plaques de guidage (63, 64), qui sont disposées symétriquement par rapport à la ligne médiane du tambour, et qui sont disposées sur des parties fixes de l'appareil (1), et que l'ensemble formé par la tringle de talon et le bourrage est transporté entre les deux plaques de guidage quand la structure porteuse (56) du dispositif de dégagement (21) tourne dans le sens opposé au dispositif collecteur (23).

10. Appareil selon la revendication 8, caractérisé par le fait qu'il est prévu un dispositif (24), servant à maintenir simultanément plusieurs des ensembles du dispositif de réception (23).

11. Appareil selon la revendication 10, caractérisé par le fait que le dispositif de maintien (24) présente un mandrin (70), de multiples disques (71), qui sont disposés côte à côte et coaxialement sur le mandrin, une colonne verticale (72), qui tourne autour de son axe (73), et qui est réunie avec le mandrin en position horizontale, un dispositif pour mouvoir le mandrin dans une direction parallèle à l'axe du tambour, vers le côté intérieur des ensembles qui sont formés par le bourrage et de la tringle de talon, et qui sont placés dans les sièges (27) du dispositif de réception (23), et un dispositif servant à déplacer verticalement le mandrin, d'une position horizontal inférieure à une position horizontale supérieure, pour soulever et soutenir les différents ensembles entre les disques, qui sont disposés côte à côte.

12. Appareil selon la revendication 1 et 2, dans lequel chaque tambour (3, 4, 5) est formé de deux flasques (38, 39) qui peuvent recevoir un mouvement de va et vieht le long de l'axe de rotation du tambour, pour permettre l'amenée d'une tringle de talon et le dégagement de la tringle de talon avec le bourrage, caractérisé par le fait que, avec le dispositif de dégagement (21), servant à agir localement sur les côtés opposés du bourrage et avec le mécanisme (60) de déplacement du dispositif de dégagement vers l'avant, est prévu un système de forces, qui est dirigé parallèlement à l'axe du tambour, du bâti (2) vers un côté du bourrage, et qui, lorsque les deux flasques (38, 39) du tambour (5) sont séparés l'un de l'autre, coopère avec le dispositif de dégagement (21), qui agit déjà sur le bourrage, pour contrarier les mouvements axiaux du bourrage par rapport à la ligne médiane du tambour.

13. Appareil selon la revendication 12, caractérisé par le fait que le système de forces qui contrarie les mouvements axiaux de la tringle de talon lorsque le tambour (5) se trouve au poste de dégagement (C), présente au moins deux surfaces d'application (65, 67), qui se trouvent en position stationnaire relativement au mouvement axial du flasque du tambour en face duquel sont placées latéralement les surfaces d'application.

14. Appareil selon la revendication 12, caractérisé par le fait qu'il est prévu un bâti de palier (68), qui a une circonférence appropriée pour recevoir et envelopper une tringle de talon $(C_2)$, et dont l'axe est dirigé parallèlement à l'axe de tambour (5), et qu'il est prévu un dispositif magnétique pour maintenir la tringle de talon à la circonférence du bâti de palier, ainsi qu'un cylindre dynamique à fluide, qui est fixé au bâti (2) et présente une tige (69), associée au bâti de palier (68) pour déplacer ledit bâti de palier dans une direction parallèle à l'axe de tambour (5), d'une position de repos, espacée du tambour, à une position d'amenée, dans laquelle la tringle de talon est enveloppée dans le profil du bâti de palier, entre les deux flasques (38, 39) du tambour ouvert.

15. Appareil selon la revendication 14, caractérisé par le fait qu'il est prévu un système servant à transporter de multiples tringles de talon $(C_2)$, dont les centres sont alignés, que ce système présente un chariot et de multiples sièges, que chaque siège est constitué par une base, servant à supporter la tringle de talon, et par des parois latérales, servant à accueillir les côtés des tringles de talon, et qu'il est prévu un dispositif pour l'entrainement du chariot dans une direction parallèle à l'axe du tambour, ainsi qu'un dispositif (37), qui est adapté pour appliquer une force de poussée tangentielle au profil de la tringle de talon pour la déplacer du siège au bâti de palier d'amenée (68).

16. Appareil selon la revendication 1 et 2, caractérisé par le fait qu'il est prévu un mécanisme d'actionnement (40) pour ouvrir le tambour qui présente deux flasques (38, 39) susceptibles d'être associés l'un à l'autre pour envelopper une tringle de talon, et pouvant être séparés l'un de l'autre pour permettre le dégagement de la tringle de talo avec le bourrage.

17. Appareil selon la revendication 16, caractérisé par le fait que le dispositif d'actionnement (40) agit sur le tambour formé par le premier et le deuxième flasque (38, 39), qui sont disposés de manière à pouvoir tourner librement, respectivement sur un premier arbre (42) ou un deuxième arbre (43), dont les axes sont alignés, le deuxième arbre (43) étant mobile axialement relativement au premier arbre, et le mécanisme d'actionnement (40) présentant un dispositif (49) pour déplacer le deuxième arbre (43) relativement au premier arbre (42) à l'encontre d'un ressort à boudin (44), qui est disposé au voisinage du deuxième arbre, en aval du flasque correspondant, de telle sorte qu'il provoque une action de pression du deuxième flasque relativement au premier flasque, et que le dispositif servant à déplacer le deuxième arbre relativement au premier arbre est exécuté de telle sorte qu'il applique, pour séparer le deuxième flasque du premier flasque, une force, qui est au moins égale à la force du ressort, et qui est opposée à celle-ci.

18. Appareil selon la revendication 17, caractérisé par le fait que le dispositif (40) de déplacement du deuxième arbre (43) relativement au premier arbre (42) présente un cylindre dynamique à fluide (49) sur le bâti (2), une bride (50), qui est disposée perpendiculairement à l'extrémité libre du deuxième arbre, et un crochet (51), qui est associé à l'extrémité de la tige du cylindre dynamique à fluide (49), est disposé à une certaine distance de la bride (50), et est appliqué contre la bride lorsque la tige est mise en action, de telle sorte qu'elle entre en action et exerce sur la bride une force qui est égale à la force du ressort (44), et qui est opposée à celle-ci.

19. Appareil selon la revendication 18, caractérisé en ce que, dans un système présentant trois tambours (3, 4, 5), les premiers flasques (38) des tambours (3, 4, 5) sont disposés de manière à pouvoir tourner librement sur de premiers arbres (42), qui sont associés à l'extrémité d'un premier groupe (6) de trois bras (8, 9, 10), disposés obliquement les uns par rapport aux autres sous un angle de 120°, que les deuxièmes flasques (39) des tambours (3, 4, 5) sont disposés sur des deuxièmes arbres (43) d'un deuxième groupe (7) de trois bras (8', 9', 10'), de manière à pouvoir tourner librement et sont disposés obliquement les uns par rapport aux autres sous un angle de 120°, que les deux groupes sont associés au même arbre central (11), et que le cylindre dynamique à fluide (49), servant à ouvrir les flasques, est disposé de telle sorte que sa tige est parallèle à l'axe de l'arbre central dans la position occupée cycliquement par chaque tambour (3, 4, 5) pour amener la tringle de talon et pour dégager la tringle de talon avec le bourrage.

**Patentansprüche**

1. Apparat (1) zum selbsttätigen Anbringen elastomerer Kernfahnen (R) auf Reifenwulstkernen ($C_1$, $C_2$), mit einem Gestell (2), welchem wenigstens eine Trommel (3, 4, 5) zugeordnet ist, die sich um ihre Achse dreht und die so ausgeführt ist, daß sie den Sitz für einen Wulstkern ($C_1$) darstellt, mit einer Scheibe (12) mit einer Drehachse parallel zur Achse der Trommel (3), um die Trommel (3) in Drehung zu bringen und um die Kernfahne (R) auf dem Wulstkern ($C_1$) anzubringen, mit einer Einrichtung (18) um die Enden der Kernfahne (R) stumpf zu verspleißen, und mit einer Einrichtung (22), um den Wulstkern ($C_2$) zuzuführen, dadurch gekennzeichnet, daß der Apparat eine erste Einrichtung (13, 14), um vor dem Schritt des Abgebens die Kernfahne (R) an dem Wulstkern ($C_1$) auszurichten und zu halten im wesentlichen in der Ebene der Mittellinie der Trommel, und eine zweite Einrichtung (21, 63, 64) aufweist, um den Wulstkern mit der Kernfahne abzugeben, wobei die durch die erste Einrichtung bestimmte Ausrichtung unverändert aufrechterhalten ist, die erste Einrichtung (13, 14) eine Mehrzahl (13) von Körpern (14) aufweist, die Konturflächen aus Metallmaterial oder aus ähnlichem Material haben, um gute Gleiteigenschaften bei Berührung mit dem elastomeren Material der Kernfahne (R) zu schaffen, die Körper (14) so angebracht sind, daß sie sich um betreffende Drehschäffte (14') frei drehen können, die einem Träger (19) des Gestells (2) mit einer solchen Anordnung zugeordnet sind, daß ein wellenförmiger Weg gebildet ist, durch welchen die Kernfahne (R), die der sich um ihre Achse drehenden Trommel (3) zugeordnet ist, derart folgt, daß die Kernfahne (R) gespannt wird und dem elastischen Zurückfedern der Kernfahne entgegengewirkt wird, die zweite Einrichtung (21, 63, 64) eine Abgabeeinrichtung (21) aufweist für lokalisierte Einwirkung auf die gegenüberliegenden Seiten der Kernfahne (R), und daß die Abgabeeinrichtung einen Vorbewegungsmechanismus (60) aufweist, der in der Ebene der Mittellinie der Trommel wirkt.

2. Apparat nach Anspruch 1 zum Anbringen einer Kernfahne (R) einer Länge gleich der Außenlänge des Wulstkernes ($C_1$), wobei die Scheibe (12) die Kernfahne (R) auf den Wulstkern aufbringt, bis die beiden einander zugewandten Enden in Form eines "V" offen sind, und wobei eine Einrichtung vorgesehen ist, um das "V" der Kernfahne mit Bezug auf die Stumpfverspleißungseinrichtung (18) auszurichten, dadurch gekennzeichnet, daß der Apparat drei Trommeln (3, 4, 5) aufweist, ein drei Arme (8, 9, 10) aufweisendes System (6, 7) von einer mittleren Drehwelle (11) abgestützt ist, die dem Gestell (2) zugeordnet ist, die Trommeln an den Enden der Arme so angebracht sind, daß sie sich um ihre parallel zur mittleren Welle angeordneten Achsen frei drehen können, die Arme zueinander in einem Winkel von 120° ausgerichtet und im Bereich dreier Stellungen an dem Gestell angeordnet sind, welche drei Stationen (A, B, C) darstellen, in welche jede Trommel bei Drehung der mittleren Welle aufeinanderfolgend gelangt, die erste Station (A) die Scheibe (12) zum Aufbringen der Kernfahne (R) auf den Wulstkern ($C_1$), wobei deren Enden in Form eines "V" offen sind, die erste Einrichtung (13, 14), welche einen wellenförmigen Weg bestimmt, durch welchen die Kernfahne hindurchgeht, wenn die Scheibe die Trommel in Drehung versetzt, und die Einrichtung aufweist zum Ausrichten des "V" der Kernfahne mit Bezug auf die Stumpfverspleißungseinrichtung (18), die in einer weiteren Station angeordnet ist, die zweite Station (B) die Einrichtung (18) zum Stumpfverspleißen der in Form eines "V" vorliegenden Enden der Kernfahne aufweist, und daß die dritte Station (C) die Einrichtung (68) zum Zuführen des Wulstkernes ($C_2$) und die zweite Einrichtung (21, 63, 64) aufweist, um während des Schrittes des Abgebens die Kernfahne mit einer Ausrichtung zu halten, die von der ersten Einrichtung (13, 14) in der ersten Station (A) bestimmt ist.

3. Apparat nach Anspruch 2, dadurch gekennzeichnet, daß die Scheibe (12) und die erste Einrichtung (13, 14), welche die Mehrzahl von Körpern (14) aufweist, um die Kernfahne (R) in der Mittellinie der Trommel auszurichten und so zu halten, und die Einrichtung (15, 16) zum Ausrichten des "V" der Kernfahne einem einzelnen Träger (19) zugeordnet sind, der an einem Drehzapfen (20) an dem Gestell (2) schwenkbar ist, dessen Achse parallel zur Trommelachse angeordnet ist.

4. Apparat nach irgendeinem der vorhergehenden Ansprüche, dadurch gekennzeichnet, daß die Mehrzahl (13) von Körpern (14) durch kleine Rollen (14) dargestellt ist, die eine Mehrzahl von Paaren bilden, die hintereinander angeordnet sind, die kleine Rolle jedes Paares eine Achse hat, die mit Bezug auf die Ebene der Mittellinie der Trommel (3) symmetrisch schräg verläuft, und daß die Kontur oder die Außenfläche jeder kleinen Rolle sich wenigstens teilweise über die Mittellinie der Trommel oder bis zu einer Stelle jenseits von dieser erstreckt derart, daß an der Kernfahne (R), die bei Drehung der Trommel (3) um ihre Achse durch die Paare hindurchgeht, eine Mehrzahl von Wellungen gebildet wird, die abwechselnd entgegengesetzte Richtung und mit Bezug auf die genannte Mittellinie gleiche Amplitude haben (Fig. 2).

5. Apparat nach Anspruch 4, dadurch gekennzeichnet, daß die kleinen Rollen (14) jedes Paares eine Einrichtung (M) aufweisen, um die Schrägstellung mit Bezug auf die Ebene der Mittellinie der Trommel zu ändern.

6. Apparat nach Anspruch 1 oder 2, dadurch gekennzeichnet, daß die Einrichtung (21) zum Abgeben des mit der Kernfahne versehenen Wulstkernes mit dem Vorbewegungsmechanismus (60) zwei Backen (53, 54) aufweist, die mit Bezug auf die Ebene der Mittellinie der Trommel symmetrisch vorhanden sind, und daß eine Einrichtung (K) vorgesehen ist, um die Backen für ein Öffnen und ein Schließen mit Bezug auf die genannte Mittellinie zu betätigen (Fig. 9).

7. Apparat nach Anspruch 6, dadurch gekennzeichnet, daß die Backen (53, 54) und die Einrichtung (K) zum Betätigen der Backen mit einer einzelnen Tragausführung (56) verbunden sind, die an einer Platte (58) des Gestells (2) angelenkt ist, die Drehachse des Gelenkes (57) zur Achse der Trommel (5) parallel verläuft, und daß der Vorbewegungsmechanismus (60) der Einrichtung (21) ein fluiddynamisches System aufweist mit einem Zylinder (61) und einer Stange (62), die geeignet sind für Drehung der Tragausführung um das Gelenk (57), das an der Platte (58) des Gestells (2) angebracht ist.

8. Apparat nach Anspruch 7, dadurch gekennzeichnet, daß in Kombination mit der Abgabeeinrichtung (21), die an der Tragausführung (568) angebracht ist, eine Einrichtung (23) zum Sammeln der aus Wulstkern und Kernfahne bestehenden Gebilde vorgesehen und so ausgeführt ist, daß sie die verschiedenen Gebilde mit ausgerichteten Wulstkernachsen transportiert, die Einrichtung (23) eine Mehrzahl von Aufnahmesitzen (27), die hintereinander angeordnet sind, und eine Einrichtung aufweist, um die Mehrzahl von Sitzen in einer Richtung parallel zur Trommelachse vorzubewegen, und daß jeder Sitz wenigstens zwei Wände (31, 32), die Seite an Seite angeordnet sind, und eine Abstützbasis (30) für den äußersten Teil oder die Kante der Kernfahne (R) aufweist (Fig. 9).

9. Apparat nach Anspruch 8, dadurch gekennzeichnet, daß zwischen der Trommel und den Sitzen (27) zum einzelnen Aufnehmen der verschiedenen Gebilde, die im Bereich der Mittellinie der Trommel angeordnet sind, zwei Führungsplatten (63, 64) vorgesehen sind, die mit Bezug auf die Mittellinie der Trommel symmetrich angeordnet und an festen Teilen des Apparates (1) angebracht sind, und daß das aus Wulstkern und Kernfahne bestehende Gebilde zwischen die beiden Führungsplatten transportiert wird, wenn die Tragausführung (56) der Abgabeeinrichtung (21) sich in Richtung gegen die Sammeleinrichtung (23) dreht.

10. Apparat nach Anspruch 8, dadurch gekennzeichnet, daß eine Einrichtung (24) vorgesehen ist, um gleichzeitig eine Mehrzahl der Gebilde der Sammeleinrichtung (23) zu halten.

11. Apparat nach Anspruch 10, dadurch gekennzeichnet, daß die Halteeinrichtung (24) einen Dorn (70), eine Mehrzahl von Scheiben (71), die Seite an Seite angeordnet und gleichachsig an dem Dorn befestigt ist, eine senkrechte Säule (72), die sich um ihre Achse (73) dreht und mit der der Dorn in waagerechter Lage verbunden ist, eine Einrichtung zum Bewegen des Dornes in einer Richtung parallel zur Trommelachse in Richtung zur Innenseite der aus Kernfahne und Wulstkern bestehenden Gebilde, die in den Sitzen (27) der Sammeleinrichtung (23) aufgenommen sind, und eine Einrichtung aufweist, um den Dorn von einer unteren waagerechten Lage zu einer oberen waagerechten Lage senkrecht zu bewegen, um die verschiedenen Gebilde zwischen den Scheiben, die Seite an Seite angeordnet sind, zu heben und abzustützen.

12. Apparat nach Anspruch 1 oder 2, wobei jede Trommel (3, 4, 5) aus zwei Flanschen (38, 39) dargestellt ist, die entlang der Drehachse der Trommel hin- und herbewegbar sind, um das Zuführen eines Wulstkernes und das Abgeben des Wulstkernes mit der Kernfahne zu ermöglichen, dadurch gekennzeichnet, daß mit der Abgabeeinrichtung (21) für örtliche Einwirkung an den gegenüberliegenden Seiten der Kernfahne, und mit dem Mechanismus (60) für das Vorbewegen der Abgabeeinrichtung, ein System von Kräften vorgesehen ist, welches parallel zur Trommelachse von dem Gestell (2) in Richtung gegen eine Seite der Kernfahne gerichtet ist und welches, wenn die beiden Flansche (38, 39) der Trommel (5) voneinander getrennt sind, in Kombination mit der Abgabeeinrichtung (21) arbeitet, die bereits auf die Kernfahne einwirkt, um axialen Bewegungen der Kernfahne mit Bezug auf die Mittellinie der Trommel entgegenzuwirken.

13. Apparat nach Anspruch 12, dadurch gekennzeichnet, daß das System von Kräften, welches axialen Bewegungen der Kernfahne entgegenwirkt, wenn die Trommel (5) sich in der Abgabestation (C) befindet, wenigstens zwei Anlageflächen (65, 67) aufweist, die sich in stationärer Lage mit Bezug auf die axiale Bewegung des Trommelflansches befinden, welchem die Anlageflächen seitlich gegenüberliegen.

14. Apparat nach Anspruch 12, dadurch gekennzeichnet, daß ein Lagergestell (68) vorgesehen ist, welches einen Umfang hat, der dazu geeignet ist, einen Wulstkern (C₂) aufzunehmen und zu umschließen, und dessen Achse parallel zur Achse der Trommel (5) verläuft, eine magnetische Einrichtung vorgesehen ist, um den Wulstkern an dem Umfang des Lagergestells zu halten, ein fluiddynamischer Zylinder vorgesehen ist, der an dem Gestell (2) befestigt ist und eine Stange (69) aufweist, die dem Lagergestellt (68) zugeordnet ist für eine Bewegung des Lagergestells in einer Richtung parallel zur Achse der Trommel (5) von einer Ruhestellung im Abstand von der Trommel zu einer Zuführstellung, in welcher der Wulstkern in dem Profil des Lagergestells zwischen den beiden Flanschen (38, 39) der offenen Trommel umschlossen ist.

15. Apparat nach Anspruch 14, dadurch gekennzeichnet, daß ein System zum Transportieren einer Mehrzahl von Wulstkernen (C₂) mit ausgerichteten Mittelpunkten vorgesehen ist, welches einen Schlitten mit einer Mehrzahl von Gehäusesitzen aufweist, jeder Sitz durch eine Basis zum Lagern des Wulstkernes und durch Seitenwände zum Aufnehmen der Seiten der Wulstkerne dargestellt ist, eine Einrichtung vorgesehen ist zum Antreiben des Schlittens in einer Richtung parallel zur Trommelachse, und daß eine Einrichtung (37) vorgesehen ist, die dazu geeignet ist, eine tangentiale Schubkraft an das Profil des Wulstkernes anzulegen für eine Bewegung von dem Gehäusesitz zu dem Zuführlagergestell (68).

16. Apparat nach Anspruch 1 oder 2, dadurch gekennzeichnet, daß ein Antriebsmechanismus (40) zum Öffnen der Trommel vorgesehen ist, die zwei Flansche (38, 39) aufweist, die einander zugeordnet werden können zum Umschließen eines Wulstkernes, und die voneinander getrennt werden können, um das Abgeben des Wulstkernes mit der Kernfahne zu ermöglichen.

17. Apparat nach Anspruch 16, dadurch gekennzeichnet, daß die Antriebseinrichtung (40) auf die Trommel wirkt, die durch den ersten und den zweiten Flansch (38, 39) gebildet ist, die an der betreffenden erste Welle (42) bzw. zweiten Welle (43) frei drehbar angebracht sind mit ausgerichteten Achsen, wobei die zweite Welle (43) mit Bezug auf die erste Welle axial bewegbar ist, der Antriebsmechanismus (40) eine Einrichtung (49) aufweist, um die zweite Welle (43) mit Bezug auf die erste Welle (42) entgegen einer Schraubenfeder (44) zu bewegen, die im Bereich der zweiten Welle stromabwärts des betreffenden Flansches angeordnet ist derart, daß sie eine Druckwirkung des zweiten Flansches mit Bezug auf den ersten Flansch hervorruft, und daß die Einrichtung zum Bewegen der zweiten Welle mit Bezug auf die erste Welle so ausgeführt ist, daß sie für Trennung des zweiten Flansches von dem ersten Flansch eine Kraft anlegt, die wenigstens gleich der Kraft der Feder und zu dieser entgegengesetzt ist.

18. Apparat nach Anspruch 17, dadurch gekennzeichnet, daß die Einrichtung (40) zum Bewegen der zweiten Welle (43) mit Bezug auf die erste Welle (42) einen fluiddynamischen Zylinder (49) an dem Gestell (2), einen Flansch (50), der an dem freien Ende der zweiten Welle rechtwinklig angebracht ist, und einen Haken (51) aufweist, der dem Ende der Stange des fluiddynamischen Zylinders (49) zugeordnet und in einem Abstand von dem Flansch (50) und in Anlage an dem Flansch angeordnet ist, wenn die Stange zur Wirkung gebracht wird derart, daß sie wirksam wird und auf den Flansch eine Kraft ausübt, die gleich der Kraft der Feder (44) und zu dieser entgegengesetzt ist.

19. Apparat nach Anspruch 18, dadurch gekennzeichnet, daß in einem drei Trommeln (3, 4, 5) aufweisenden System die ersten Flansche (38) der Trommeln (3, 4, 5) auf ersten Wellen (42) frei drehbar angebracht sind, die dem Ende einer ersten Gruppe (6) von drei Armen (8, 9, 10) zugeordnet sind, die in einem Winkel von 120° zueinander schräg stehen, die zweiten Flansche (39) der Trommeln (3, 4, 5) an zweiten Wellen (43) einer zweiten Gruppe (7) von drei Armen (8', 9', 10') frei drehbar angeordnet und in einem Winkel von 120° zueinander schräg stehen, die beiden Gruppen der gleichen mittleren Welle (11) zugeordnet sind, und daß der fluiddynamische Zylinder (49) zum Öffnen der Flansche so angeordnet ist, daß seine Stange parallel zur Achse der mittleren

31 0 026 498 32

Welle in der Stellung ist, die von jeder Trommel (3, 4, 5) zyklisch eingenommen wird zum Zuführen des Wulstkernes und zum Abgeben des Wulstkernes mit der Kernfahne.

Fig. 1

0026 498

0 026 498

Fig. 2

Fig. 3

2

0 026 498

Fig. 4

Fig. 5

3

Fig. 6

0 026 498

4

Fig. 7

0026498

Fig. 8

0026498

Fig. 9